# EUROPEAN PATENT SPECIFICATION

(11) **EP 4 001 842 B1**
(45) Date of publication and mention of the grant of the patent: **03.01.2024**
(21) Application number: 21205796.2
(22) Date of filing: 01.11.2021
(51) Int. Cl.: G01C 21/00, B60W 30/18, B60W 50/14

(54) **VEHICLE CONTROL METHOD, VEHICLE CONTROL APPARATUS, VEHICLE AND STORAGE MEDIUM**
FAHRZEUGSTEUERUNGSVERFAHREN, FAHRZEUGSTEUERUNGSVORRICHTUNG, FAHRZEUG UND SPEICHERMEDIUM
SYSTÈME DE COMMANDE DE VÉHICULE, PROCÉDÉ DE COMMANDE DE VÉHICULE, VÉHICULE ET SUPPORT D'INFORMATIONS

(30) Priority: 13.11.2020 CN 202011266585
(43) Date of publication of application: 25.05.2022
(73) Proprietor: Guangzhou Xiaopeng Motors Technology Co., Ltd., Guangzhou, Guangdong Province 510000 (CN)
(72) Inventor: SUN, Jie, Guangzhou (CN)
(74) Representative: Yip, Matthew Wing Yu

(56) References cited:
- WO-A1-2020/091120
- WO-A1-2020/201861
- WO-A2-2020/174279
- DE-A1-102017 201 613
- DE-A1-102018 221 740
- US-A1- 2017 366 930
- US-A1- 2020 324 778

## Description

### Field of Invention

The present invention relates to the technical field of vehicles, and in particular to a vehicle control method, a vehicle control apparatus, a vehicle and a computer storage medium.

### Background

When vehicles are traveling, due to potholes or bumps on road surfaces, scrapes or even vehicle breakdown may occur for vehicle models with low ground clearance. In related technologies, such scrapes can be avoided only by the driver's observation of road conditions during driving, and the vehicle cannot avoid scrapes actively. Moreover, environmental factors may lead to late discovery, resulting in inability to avoid scrapes or poor avoidance effects. Therefore, how to give drivers an active early scrape warning via vehicles has become an urgent issue to be resolved. WO 2020/091120 A1 discloses an electronic device for a vehicle comprising a power supply unit for supplying power, an interface unit for receiving, from a server and via a communication device, high definition map data of a specified area, and a processor for continuously generating electronic horizon data for the specified area on the basis of the HD map data in a state in which the power is supplied, and setting a light emission area of a head lamp on the basis of the electronic horizon data. WO 2020/174279 A2 discusses systems and methods for vehicle navigation.

### Summary of Invention

In view of this, embodiments of the present invention provide a vehicle control method, a vehicle control apparatus, a vehicle and a computer storage medium. In accordance with the present invention, there are provided a vehicle control method as recited by claim 1 and a vehicle control apparatus as recited by claim 10. Preferred features are set out in the dependent claims.

The present invention provides a vehicle control method, including:
acquiring position information of a vehicle in real time to determine a current position of the vehicle;
acquiring data of first road anomalies within a first predetermined range of the current position from a local road anomalies database of the vehicle;
screening the data of the first road anomalies to obtain data of second road anomalies within a second predetermined range of the current position, wherein the first predetermined range is larger than the second predetermined range; and
controlling the vehicle to perform road anomalies processing based on the data of the second road anomalies.

In line with the invention, said acquiring data of first road anomalies within a first predetermined range based on the position information includes:
acquiring data of first road anomalies at first predetermined time intervals based on the position information.

Said screening the data of the first road anomalies to obtain data of second road anomalies within a second predetermined range preferably includes:
screening the data of the first road anomalies at second predetermined time intervals to obtain the data of the second road anomalies, wherein the second predetermined time interval is shorter than the first predetermined time interval.

Said controlling the vehicle to perform road anomalies processing based on the data of the second road anomalies preferably includes:
controlling the vehicle to decelerate to travel through road anomalies or change to an adjacent lane based on the data of the second road anomalies when the vehicle is in an assistant driving mode.

Said controlling the vehicle to perform road anomalies processing based on the data of the second road anomalies preferably further includes:
when there are a plurality of pieces of data of second road anomalies, sorting the plurality of pieces of data of the second road anomalies based on distances from the current position; and
controlling the vehicle to perform road anomalies processing based on the data of the second road anomalies closest to the current position according to a result of said sorting.

The control method preferably further includes:
detecting whether road anomalies data on a server for the vehicle has been updated; and
updating the local road anomalies database of the vehicle when the road anomalies data on the server has been updated.

The local road anomalies database preferably includes:
acquisition site information, geographic location information, acquisition time information and/or picture information of anomalies.

The present invention further provides a vehicle control apparatus, including:
a positioning module, configured to acquire position information of a vehicle in real time to determine a current position of the vehicle;
an acquisition module, configured to acquire data of first road anomalies within a first predetermined range of the current position from a local road anomalies database of the vehicle; wherein
the acquisition module is also configured to screen the data of the first road anomalies to obtain data of second road anomalies within a second predetermined range of the current position, where the first predetermined range is larger than the second predetermined range; and
a control module, configured to control the vehicle to perform road anomalies processing based on the data of the second road anomalies.

The present invention further provides a vehicle including a processor and a memory having a computer program stored therein, where the computer program, when executed by the processor, performs the vehicle control method.

The present invention further provides a non-volatile computer-readable storage medium having a computer program stored therein, where the computer program, when executed by one or more processors, performs the vehicle control method.

According to the vehicle control method, the vehicle control apparatus and the vehicle in the implementations of the present invention, the vehicle may actively identify anomalies by detecting the anomalies based on the acquired data of second road anomalies. Furthermore, the vehicle is controlled to perform road anomalies processing based on the identified road anomalies data, e.g., send an early warning prompt, such that the vehicle can actively perform road anomaly identification for the driver while performing road anomalies processing.

### Brief Description of Drawings

The above and/or additional aspects and advantages of the present invention will become apparent and easily understood from the description of the embodiments in combination with the accompanying drawings below, wherein:
Fig. 1 is a schematic flow chart of a vehicle control method according to the present invention;
Fig. 2 is a modular chart of a vehicle control apparatus according to the present invention;
Fig. 3 is a schematic flow chart of a vehicle control method according to the present invention;
Fig. 4 is a schematic flow chart of a vehicle control method according to the present invention;
Fig. 5 is a schematic flow chart of a vehicle control method according to the present invention;
Fig. 6 is a schematic flow chart of a vehicle control method according to the present invention;
Fig. 7 is a schematic flow chart of a vehicle control method according to the present invention;
Fig. 8 is an example diagram of a vehicle control method according to the present invention;
Fig. 9 is an example diagram of a vehicle control method according to the present invention; and
Fig. 10 is an example diagram of a vehicle control method according to the present invention.

### Detailed Description

The embodiments of the present invention are described in detail below, and examples of the embodiments are shown in the accompanying drawings, wherein the same or similar reference numerals throughout the text indicate the same or similar elements or elements having the same or similar functions. The embodiments described below by reference to the accompanying drawings are exemplary and merely intended to explain the present invention and are not to be construed as limiting the present invention.

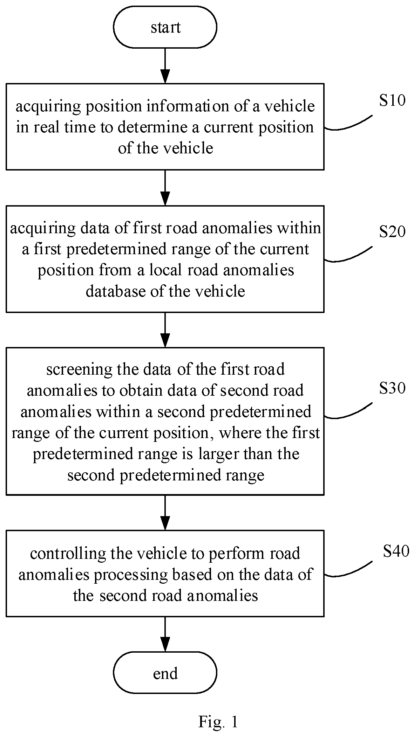

Referring to Fig. 1, a vehicle control method includes:
S10: acquiring position information of a vehicle in real time to determine a current position of the vehicle;
S20: acquiring data of first road anomalies within a first predetermined range of the current position from a local road anomalies database of the vehicle;
S30: screening the data of the first road anomalies to obtain data of second road anomalies within a second predetermined range of the current position, where the first predetermined range is larger than the second predetermined range; and
S40: controlling the vehicle to perform road anomalies processing based on the data of the second road anomalies.

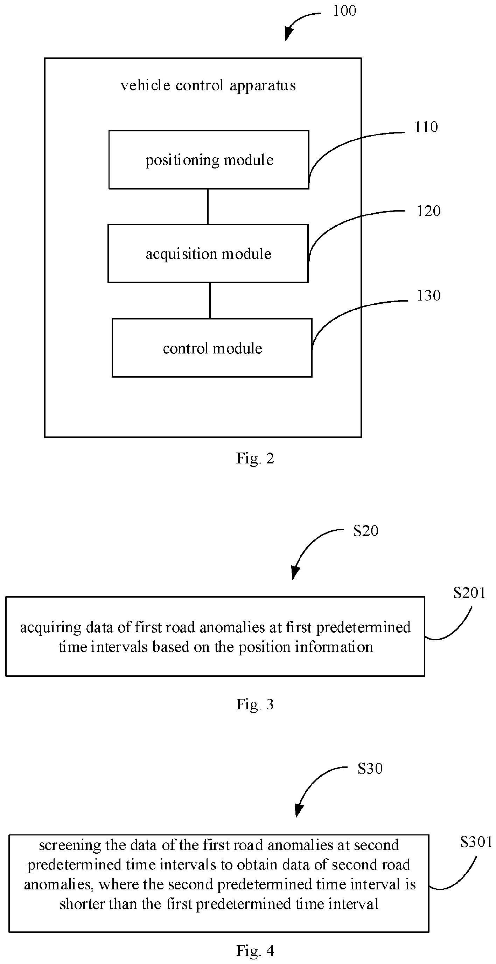

Referring to Fig. 2, the present application further provides a vehicle control apparatus 100, and the vehicle control method in the implementation of the present application may be performed by the vehicle control apparatus 100. The vehicle control apparatus 100 includes a positioning module 110, an acquisition module 120 and a control module 130. S10 may be performed by the positioning module 110, S20 and S30 may be performed by the acquisition module 120, and S40 may be performed by the control module 130. Alternatively, the positioning module 110 is configured to acquire position information of a vehicle in real time to determine a current position of the vehicle. The acquisition module 120 is configured to acquire data of first road anomalies within a first predetermined range of the current position from a local road anomalies database of the vehicle, and screen the data of the first road anomalies to obtain data of second road anomalies within a second predetermined range of the current position, where the first predetermined range is larger than the second predetermined range. The control module 130 is configured to control the vehicle to perform road anomalies processing based on the data of the second road anomalies.

The present application further provides a vehicle including a processor and a memory having a computer program stored therein. The processor is configured to acquire position information of the vehicle in real time to determine a current position of the vehicle; acquire data of first road anomalies within a first predetermined range of the current position from a local road anomalies database of the vehicle; screen the data of the first road anomalies to obtain data of second road anomalies within a second predetermined range of the current position; and control the vehicle to perform road anomalies processing based on the data of the second road anomalies.

Specifically, when vehicles are traveling, due to road anomalies such as potholes or bumps of different sizes, different degrees of scrapes or even breakdown may occur to some vehicle models with low ground clearance. Such vehicle underbody scrapes can be avoided only by the drivers' observation and experiences.

In the present application, a vehicle service provider may send a special road tester to acquire road anomalies in the field at an early data acquisition stage, and these road anomalies include potholes or bumps of different sizes. The road tester will drive a test vehicle within specified areas for real road tests. The test vehicle is a special vehicle dedicated to various road anomalies, such as a special vehicle for testing vehicle underbody scrapes. During the real road tests, the road tester will record scraping point information from scrapes to the vehicle underbody of the test vehicle, including scraping point name, locality and city name, acquisition time, degree of scrapes, latitude and longitude of scraping point location, and live shot pictures. The above road anomalies data is uploaded to a vehicle background cloud server after being approved by relevant operation and maintenance personnel. The road test areas may be citywide or nationwide as needed. The acquired road anomalies data will be updated as required.

In this way, the authenticity and reliability of the acquired data may be effectively ensured through preliminary field road tests and manual verification and audit.

When a user is driving, a vehicle-mounted terminal such as a central control screen of the vehicle will download road anomalies data from the vehicle background cloud server to a local database. For example, after the user starts a vehicle navigation application, the vehicle-mounted terminal communicates with the cloud server after relevant interactive operations to download road anomalies data. Of course, the user may also set automatic data download, that is, road anomalies data will be automatically downloaded to the local database every time the user starts the vehicle navigation application.

During traveling, the vehicle may acquire real-time vehicle position information as the current position through a global positioning system (GPS). The position information includes longitude and latitude data (lon, lat), such as (114.038779, 22.553664), and the longitude and latitude data can be used to accurately mark any location on the earth. The data of the first road anomalies within the first predetermined range of the current position are obtained from the local road anomalies database of the vehicle, and the first predetermined range R1 refers to a distance range around the current position of the vehicle, with a latitude and longitude range of (lon±R1, lat±R1), or a distance range around the current latitude and longitude, in the unit of length. The first predetermined range R1 is based on a first wide-range road anomalies data acquisition, and may be set as a length range in kilometers, such as 3 km, 4 km and 5 km. For example, if the first predetermined range is set at R1=3 km and the current position is set at (114.038779, 22.553664), then the first predetermined range of the current position is (114.038779±3 km, 22.553664±3 km), i.e., within 3 km around the current position.

It can be understood that the current position of the vehicle changes in real time during traveling.

In the implementation, corresponding road anomalies data may be extracted from the local road anomalies database regularly based on the first predetermined range of the current position of the vehicle, such as vehicle underbody scraping point data information within 3 km around the current position. The data information is extracted and cached in a data buffer co-existing in the local database.

As the vehicle travels, the system will regularly acquire the data of second road anomalies within the second predetermined range of the current position from the data of the first road anomalies in the buffer. The second predetermined range R2 refers to a distance range around the current position of the vehicle, with a latitude and longitude range of (lon±R2, lat±R2), or a distance range around the current latitude and longitude, in the unit of length. The second predetermined range R2 is based on a second small-range road anomalies data acquisition, and may be set as a length range in meters, such as 10 m, 50 m and 100 m. The second predetermined range R2 is smaller than the first predetermined range R1, or the range for searching road anomalies data is regularly narrowed as the vehicle moves. For example, if the second predetermined range is set at R2=50 m and the current position is set at (114.038779, 22.553664), then the second predetermined range of the current position is (114.038779±50 m, 22.553664±50 m), i.e., within 50 m around the current position.

The system will match anomalies from the data of road anomalies in the second predetermined range based on the real-time position of the vehicle. If there are road anomalies in the second predetermined range, data of the anomalies, such as distance from the current position, an orientation relation with the current position and status of the anomalies will be extracted, followed by subsequent road anomalies processing. If no anomaly is found in the second predetermined range, i.e., none of the data of the first road anomalies is in the second predetermined range of the current position, this matching is abandoned without any processing, followed by proceeding to the next search to match anomalies.

In general, the quantity of data in the local database of the vehicle is relatively large. If the database is frequently queried, the burden will be increased and the efficiency is not high. In this embodiment, the data processing amount can be effectively reduced and the query efficiency can be improved by setting two predetermined ranges for searching and matching. Specifically, search within the first predetermined range is performed at a long time interval (e.g., 1 min) to query data from the database, so as to form cached data. Searches within the second predetermined range are performed at a short time interval (e.g., 5s) to query data from the cached data. In this case, the data size of the cached data is far smaller than that of the database, and a query once every 5s may be responded to quickly, such that anomalies can be searched and matched immediately and effectively.

The vehicle is controlled to perform road anomalies processing based on the data of the second road anomalies. Processing methods include but are not limited to early warning via a voice system, such as alerting the driver via voice: "Please be aware that there is a pothole within 35 m ahead, which may scrape the vehicle underbody". Early warning information prompts may also be sent via an instrument panel, and the vehicle user may also be alerted via a vehicle navigation system according to pre-settings. The early warning prompts here are merely intended to assist the driver in further judging road conditions.

In conclusion, according to the vehicle control method, the vehicle control apparatus and the vehicle in the implementations of the present application, the vehicle can actively identify anomalies by detecting the anomalies based on the acquired data of second road anomalies. Furthermore, the vehicle is controlled to perform road anomalies processing based on the data of identified road anomalies, e.g., send an early warning prompt, such that the vehicle can actively perform road anomaly identification for the driver while performing road anomalies processing.

Referring to Fig. 3, S20 includes:
S201: acquiring data of first road anomalies at first predetermined time intervals based on the position information.

The processor is configured to acquire data of first road anomalies at first predetermined time intervals based on the position information.

S201 may be performed by the acquisition module 120. Alternatively, the acquisition module 120 is configured to acquire data of first road anomalies at first predetermined time intervals based on the position information.

The first predetermined time interval T1 in the implementation may be a time unit value preset by the system, such as 1 min, 3 min and 5 min. The first predetermined time interval T1 may also be set by the user based on driving areas.

In practice, acquisition of data of first road anomalies within the first predetermined range is triggered at first predetermined time intervals, where the first predetermined time interval may be comprehensively selected based on the first predetermined range and other environmental factors including the maximum speed of the vehicle. Specifically, after the user selects an appropriate first predetermined range, the system will provide some reasonable first predetermined time interval values for selection based on corresponding calculations. For example, according to relevant regulations, the running speed may be considered as the maximum speed of 180 km/h here, then for the first predetermined range R1=3 km, the vehicle at a speed of 180 km/h needs to travel for 1 min before exceeding the first predetermined range 3 km, i.e., road anomalies data needs to be updated at an interval of 1 min (the first predetermined time interval T1) in the first predetermined range R1. While vehicles at a speed lower than 180 km/h need to travel for a longer time, then updating road anomalies data every 1 minute can ensure that the road anomalies data remains up-to-date. To sum up, if the maximum speed of the vehicle is Smax, a setting range of the first predetermined time interval T1 is T1<=R1/(Smax/60) in minutes. For example, if the maximum speed of the vehicle is Smax=120 and the first predetermined range is R1=6 km, the value of T1<=6/(120/60) should be less than or equal to 3 min, such as 3 min, 2 min and 1 min.

Specifically, the data of first road anomalies within the first predetermined range of the current position is acquired from the local road anomalies database of the vehicle. Further, an acquisition action is triggered once at first predetermined time intervals. Whenever the system time interval reaches the first predetermined time interval, for example, 1 min, the data of first road anomalies of the current position will be acquired from the local road anomalies database of the vehicle. For example, when the vehicle is traveling, scraping point data within 3 km (e.g., the first predetermined range R1=3 km) around the current position of the vehicle is acquired from the local road anomalies database every 1 min. There are 5 matched scraping points, i.e., D1, D2, D3, D4 and D5. Then, the acquired data information on the 5 scraping points will be put into the data buffer as cached data.

Referring to Fig. 4, S30 includes:
S301: screening the data of the first road anomalies at second predetermined time intervals to obtain data of second road anomalies, where the second predetermined time interval is shorter than the first predetermined time interval;

The processor is configured to screen the data of the first road anomalies at second predetermined time intervals to obtain the data of the second road anomalies, where the second predetermined time interval is shorter than the first predetermined time interval.

S301 may be performed by the acquisition module 120. Alternatively, the acquisition module 120 is configured to screen the data of the first road anomalies at second predetermined time intervals to obtain data of second road anomalies, where the second predetermined time interval is shorter than the first predetermined time interval.

The second predetermined time interval T2 needs to be shorter than the first predetermined time interval T1, which is a time unit value preset by the system, such as 1s, 3s and 5s. The second predetermined time interval T2 may also be set by the user based on driving areas, and the second predetermined time interval is comprehensively selected based on the second predetermined range and other environmental factors including the maximum speed of the vehicle. After the user selects an appropriate second predetermined range, the system will provide some reasonable second predetermined time interval values for selection based on corresponding calculations. The user's selection may be set based on driving areas, e.g., based on past driving experience. When a current road section is in good conditions, the user may select a longer time interval. For example, if optional values include 5s, 4s, 3s and the like, the user may select 5s, and if the road section is in poor conditions, the user may select 1s.

Specifically, as the vehicle travels, data of second road anomalies within the second predetermined range of the current position will be regularly acquired from the data of the first road anomalies in the buffer. Further, the acquisition is triggered by the second predetermined time interval. Whenever the system time interval reaches the second predetermined time interval 5s, data of second road anomalies of the current position will be acquired from the cached data of the first road anomalies. For example, when the vehicle is traveling, scraping point data within 50 m (e.g., the second predetermined range R2=50 m) around the current position of the vehicle is acquired from the cached data of the first road anomalies every 5s. There are 5 scraping points in the cached data of the first road anomalies, i.e., D1, D2, D3, D4 and D5. On this basis, there are scraping points D1 and D3 that are 50 m from the current position. Then D1 and D3 are final matching results of anomalies. Subsequent road anomalies processing follows, which includes but is not limited to early warning via a voice system. If no anomaly is found in the second predetermined range, i.e., none of D1, D2, D3, D4 and D5 is within 50 m around the current position, this matching is abandoned without any processing, followed by proceeding to the next search to match anomalies.

Based on the first and second predetermined time intervals and the first and second predetermined ranges, in the second predetermined range, road anomalies data is acquired within the first predetermined range, while the second predetermined time interval is set based on the second predetermined range and environmental factors. Thus, the data of second road anomalies is valid data acquired in real time from the local road anomalies database, thereby guaranteeing the effectiveness of acquiring road anomalies data.

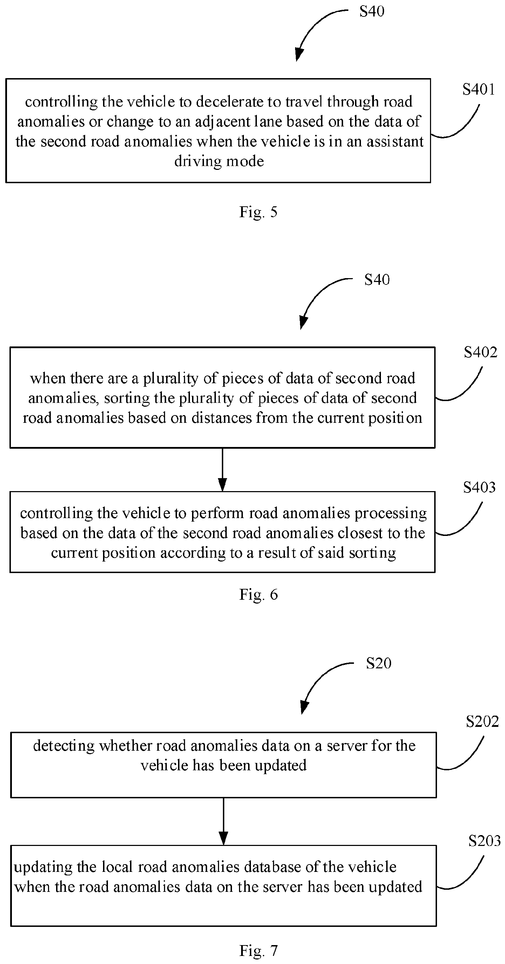

Referring to Fig. 5, S40 includes:
S401: controlling the vehicle to decelerate to travel through road anomalies or change to an adjacent lane based on the data of the second road anomalies when the vehicle is in an assistant driving mode;

The processor is configured to control the vehicle to decelerate to travel through road anomalies or change to an adjacent lane based on the data of the second road anomalies when the vehicle is in the assistant driving mode.

S401 may be performed by the control module 130. Alternatively, the control module 130 is configured to control the vehicle to decelerate to travel through road anomalies or change to an adjacent lane based on the data of the second road anomalies when the vehicle is in the assistant driving mode.

Specifically, with the development of automobile intelligence, more and more vehicles use assistant driving mode systems, such as adaptive cruise control (ACC) and lane centering control (LCC). The ACC mode can assist a car in automatically recording and detecting whether there is a car in front, automatically keeping a distance from the car in front, and automatically braking in case of an emergency. The LCC can assist a driver in controlling a steering wheel and keeping a vehicle centered in a current lane. When the vehicle in the implementation is controlled to match anomalies from cached data of the second road anomalies, and the vehicle is in an ACC mode, the ACC may control the vehicle to decelerate, such that the driver can re-plan a travel route, such as change to an adjacent lane. When only the LCC mode is enabled, the driver decelerates by stepping on a brake after receiving an early warning message, and the LCC is temporarily disabled, such that the driver can further judge whether it is necessary to re-plan the travel route, such as change to an adjacent lane. While in the ACC/LCC mode, the ACC may control the vehicle to decelerate, and the LCC is temporarily disabled, such that the driver can further judge whether it is necessary to re-plan the travel route, such as change to an adjacent lane. The road anomalies processing here, such as early warning prompts, is only intended to assist the driver in further judging road conditions, and will not replace the driver in route re-planning.

In this way, when the vehicle is in an assistant driving mode, the vehicle can also actively send early warnings of road anomalies to the driver effectively while performing road anomalies processing.

Referring to Fig. 6, S40 further includes:
S402: when there are a plurality of pieces of data of second road anomalies, sorting the plurality of pieces of data of second road anomalies based on distances from the current position; and
S403: controlling the vehicle to perform road anomalies processing based on the data of the second road anomalies closest to the current position according to a result of said sorting.

The processor is configured to: when there are a plurality of pieces of data of second road anomalies, sort the plurality of pieces of data of second road anomalies based on distances from the current position; and control the vehicle to perform road anomalies processing based on the data of the second road anomalies closest to the current position according to the sorting result.

S402 and S403 may be performed by the control module 130. Alternatively, the control module 130 is configured to: when there are a plurality of pieces of data of second road anomalies, sort the plurality of pieces of data of second road anomalies based on distances from the current position; and control the vehicle to perform road anomalies processing based on the data of the second road anomalies closest to the current position according to the sorting result.

Specifically, in the implementation, after the data of second road anomalies within the second predetermined range of the current position is acquired from the cached data of the first road anomalies, anomalies within the range will be detected. If there is one and only one anomaly, the system will give an early warning for the anomaly, such as a voice prompt of the anomaly. If there are two or more anomalies, the system will sort the plurality of anomalies based on distances from the current position. Then, an anomaly closest to the current position is found out based on the sorting result to control the vehicle to perform road anomalies processing, such as early warning via voice. For example, when the vehicle is traveling, scraping point data within 50 m (the second predetermined range R2=50 m) around the current position O of the vehicle are acquired from the cached data of the first road anomalies every 5s. There are two scraping points D1 and D3 in the range. In this case, the system will further calculate the distances based on information such as longitude and latitude as well as the current position. If D1(lon1, lat1)-O(lon, lat)=35 m and D3(lon3, lat3)-O(lon, lat)=20 m, then D3 is an anomaly closest to the current position O, the system will take D3 as the best point for this matching, and extract data of the anomaly D3, such as a distance from the current position, an orientation relation with the current position and status of the anomaly, so as to further perform anomaly processing, such as a voice prompt: "Please be aware that there is a pothole within 20 m ahead, which may scrape the vehicle underbody" or "Please be aware that there is pothole within 20 m ahead on the right, which may scrape the vehicle underbody". The orientation relation here may be acquired from the GPS navigation system and judged such that the driver can be informed of an orientation of the anomaly, and thus effectively judge whether it is necessary to decelerate or change lanes.

Referring to Fig. 7, S20 further includes:
S202: detecting whether road anomalies data on a server for the vehicle has been updated; and
S203: updating the local road anomalies database of the vehicle when the road anomalies data on the server has been updated.

The processor is configured to detect whether the road anomalies data on the server for the vehicle has been updated, and update the local road anomalies database of the vehicle when the road anomalies data on the server has been updated.

S202 and S203 may be performed by the acquisition module 120. Alternatively, the acquisition module 120 is configured to detect whether the road anomalies data on the server for the vehicle has been updated, and update the local road anomalies database of the vehicle when the road anomalies data on the server has been updated.

Specifically, the vehicle service provider may send a special road tester to acquire road anomalies in the field at the early data acquisition stage in the implementation, and the acquired data is uploaded to the vehicle background cloud server after being approved by relevant operation and maintenance personnel. The acquired data will be updated as required. The road anomalies data in the vehicle control method in this implementation is acquired from the local database downloaded from the background cloud server. Data download is performed by a corresponding vehicle-mounted terminal such as the vehicle navigation system. When the vehicle navigation system is started every time, the system will monitor and query whether there is an update of road anomalies data, and if there is any update, the system will automatically start downloading the road anomalies data to the local road anomalies database. If the system is started, the vehicle navigation system will also be started. If there is no update, the local road anomalies database will continue to be used without re-downloading.

The local road anomalies database includes:
acquisition site information, geographic location information, acquisition time information and/or picture information of anomalies;

Specifically, the vehicle service provider may send a special road tester to acquire road anomalies in the field at the early data acquisition stage in the implementation, and these road anomalies include potholes or bumps of different sizes. The road tester will drive a test vehicle within specified areas for real road tests. The test vehicle is a special vehicle dedicated to various road anomalies, such as a special vehicle for testing vehicle underbody scrapes. During the real road tests, the road tester will record data required according to the anomalies, such as acquisition site information, geographic location information, acquisition time information and/or picture information of anomalies. Among them, the site information refers to the geographic location name of the current anomaly, including specific names of country, city, region and road. The geographic location information includes location information that can be used for positioning, such as latitude and longitude. The acquisition time information is the specific time when the anomaly is acquired. The picture information refers to live shot pictures of anomalies, which may be saved in jpg or other formats. Live shot pictures of anomalies may be provided for subsequent early warning prompts as required. For example, information on anomalies in vehicle underbody scrapes under test includes scraping point name, locality and city name, acquisition time, degree of scrape, latitude and longitude of scraping point location, and live shot pictures. The road test areas may be citywide or nationwide as needed. The acquired road anomalies data will be updated regularly or irregularly as required.

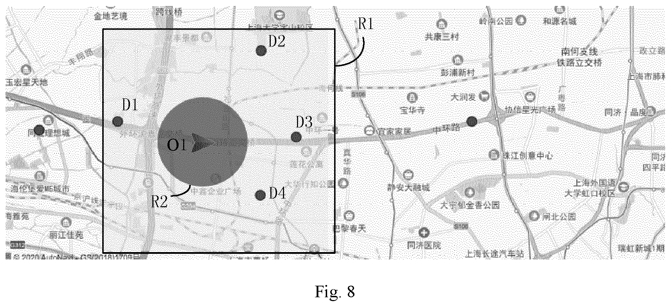

With reference to Fig. 8, Fig. 9 and Fig. 10, a specific implementation process of the vehicle control method according to the implementations of the present application will be described, using a vehicle underbody scrape anomaly as an example.

As shown in Fig. 8, the vehicle travels to a longitude and latitude point O1 (lon1, lat1) at a moment, with the first predetermined time interval T1=1 min, the system is triggered to query the local database, i.e., the query is performed once every 1 min. Data of anomalies within the first predetermined range R1=3 km around the current position of the vehicle is queried, where latitude and longitude of these anomalies fall within a region around O1 (lon1±3 km, lat1±3 km), i.e., an area indicated by a rectangular box in the figure, to match four anomalies D1, D2, D3 and D4, and the acquired anomalies data is stored in the data cache.

When the query of a caching database is triggered by the second predetermined time interval T2=1s, anomalies data in the data cache for the second predetermined range R2=50 m around the current position of the vehicle i.e., an area indicated by a circle in the figure, is matched, and no anomaly match is identified in the second predetermined range. Then the matching result is abandoned without any processing. The vehicle control apparatus proceeds with the next search for matching anomalies.

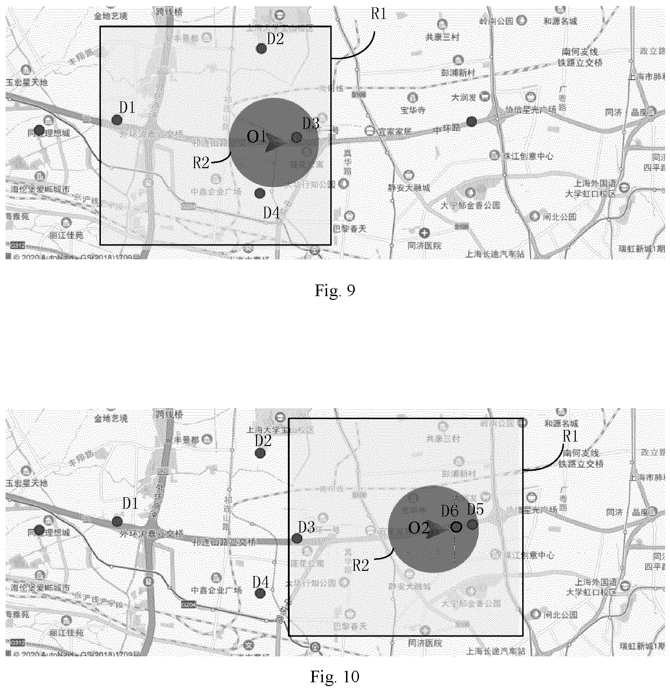

As shown in Fig. 9, as the vehicle moves forward, the system is not triggered by the first predetermined time interval T1=1 min to query the local database, i.e., it is less than 1 min since the last query for data of first road anomalies. However, the second predetermined time interval T2=1s has been triggered to perform a cache database query, i.e., to start querying the cache database for a second time. A matching scraping anomaly D3 is identified this time, as shown in the circle area in the figure. Anomalies data of D3 is extracted, and the relative distance and orientation are calculated, i.e., D3(lon3, lat3)-O(lon, lat)=35 m. The system starts to perform anomalies processing such as early warning prompts, for example, alerting the driver via voice: "Please be aware that there is a pothole within 35 m ahead, which may scrape the vehicle underbody".

As shown in Fig. 10, as the vehicle moves forward, the system is triggered by the first predetermined time interval T1=1 min again to query the local database. Data of anomalies within the first predetermined range R1=3 km around the current position O2 of the vehicle is queried, where latitude and longitude of these anomalies fall within the region of O2 (lon2±3 km, lat2±3 km), i.e., an area indicated by a rectangular box in the figure, to found three matching anomalies D3, D5 and D6, and the acquired anomalies data is stored in the data buffer.

When the query of the caching database is triggered by the second predetermined time interval T2=1s, two items of anomalies data for points D5 and D6 within the second predetermined range R2=50 m around the current position of the vehicle are matched in the cached data, i.e., an area indicated by a circle in the figure. The system will further calculate distance and orientation relations between D3 and O2, D5 and O2 to obtain D5(lon5, lat5)-O2(lon, lat)=35 m and D6(lon6, lat6)-O2(lon, lat)=10 m, and then identify that D6 is the current best matching anomaly. Next, the system starts to perform anomalies processing such as early warning prompts, for example, alerting the driver via voice: "Please be aware that there is a pothole within 10 m ahead, which may scrape the vehicle underbody".

The system acquires the position information of the vehicle in real time to determine the current position of the vehicle; acquires data of first road anomalies within the first predetermined range of the current position from the local road anomalies database of the vehicle; and screens the data of the first road anomalies to acquire data of second road anomalies within the second predetermined range of the current position. Anomalies are detected based on the acquired data of the second road anomalies, such that the vehicle can actively identify the anomalies. In addition, the vehicle is controlled to perform road anomalies processing based on the identified road anomalies data, such as early warning prompts, such that the vehicle can actively send an early warning of road anomalies to the driver while performing road anomalies processing. In the anomalies matching, data may be queried from the cached data in the short second predetermined time interval by searching within the first and second predetermined ranges, such that the anomalies can be searched and matched more immediately and effectively.

The present application further provides a computer-readable storage medium. A non-volatile computer-readable storage medium having a computer program stored thereon is provided, where the computer program, when executed by one or more processors, performs the vehicle control method according to any one of the implementations.

The present application further provides a vehicle, including a memory and one or more processors, where one or more programs are stored in the memory and configured to be executed by the one or more processors. The programs include executing the vehicle control method according to any one of the implementations.

The processors may be configured to provide computing and control capabilities to support the operation of the entire vehicle. The memory provides an environment for computer-readable instructions stored therein to run.

It should be understood by those skilled in the art that all or part of the processes in the methods of the embodiments may be completed by means of a computer program instructing relevant software. The programs may be stored in a non-volatile computer-readable storage medium, the programs, when executed, may include processes of the method embodiments. The storage medium may be magnetic disk, optical disk, read-only memory (ROM), etc.

The above embodiments merely express several implementations of the present application, but should not be construed as limitations to the scope of patent rights of the present application despite of specific and detailed description. It should be noted that those skilled in the art can make various changes and improvements without departing from the concept of the present application, which should be incorporated in the protection scope of the present application. Therefore, the protection scope of patent rights of the present application shall be subjected to appended claims.

## Claims

1. A vehicle control method, comprising:
step 1, acquiring (S10) position information of a vehicle in real time to determine a current position of the vehicle;
step 2, acquiring (S20) data of first road anomalies within a first predetermined range of the current position from a local road anomalies database of the vehicle;
step 3, screening (S30) the data of the first road anomalies to obtain data of second road anomalies within a second predetermined range of the current position, wherein the first predetermined range is larger than the second predetermined range; and
step 4, controlling (S40) the vehicle to perform road anomalies processing based on the obtained data of the second road anomalies; **characterised in that**:
said step 2 comprises acquiring (S201) the data of the first road anomalies at first predetermined time intervals based on the position information.

2. The vehicle control method of claim 1, wherein said step 3 comprises:
screening (S301) the data of the first road anomalies at second predetermined time intervals to obtain the data of the second road anomalies, wherein the second predetermined time interval is shorter than the first predetermined time interval.

3. The vehicle control method of any preceding claim, wherein said step 4 comprises:
controlling (S401) the vehicle to decelerate to travel through road anomalies based on the data of the second road anomalies when the vehicle is in an assistant driving mode.

4. The vehicle control method of any preceding claim, wherein said step 4 comprises:
controlling (S401) the vehicle to change to an adjacent lane based on the data of the second road anomalies when the vehicle is in an assistant driving mode.

5. The vehicle control method of any preceding claim, wherein said step 4 comprises:
generating an audio or visual warning of the second road anomalies.

6. The vehicle control method of any preceding claim, wherein said step 4 comprises:
when there are a plurality of pieces of data of second road anomalies, sorting (S402) the plurality of pieces of data of second road anomalies based on distances from the current position; and
controlling (S403) the vehicle to perform road anomalies processing based on the data of the second road anomalies closest to the current position according to a result of said sorting.

7. The vehicle control method of any preceding claim, further comprising:
detecting (S202) whether road anomalies data on a server for the vehicle has been updated; and
updating (S203) the local road anomalies database of the vehicle when the road anomalies data on the server has been updated.

8. The vehicle control method of claim 7, wherein:
said detecting is performed every time when a navigation system of the vehicle is started.

9. The vehicle control method of any preceding claim, wherein the local road anomalies database comprises:
acquisition site information, geographic location information, acquisition time information and/or picture information of anomalies.

10. A vehicle control apparatus (100), comprising:
a positioning module (110), configured to acquire position information of a vehicle in real time to determine a current position of the vehicle;
an acquisition module (120), configured to acquire data of first road anomalies within a first predetermined range of the current position from a local road anomalies database of the vehicle; wherein
the acquisition module is also configured to screen the data of the first road anomalies to obtain data of second road anomalies within a second predetermined range of the current position, wherein the first predetermined range is larger than the second predetermined range; and
a control module (130), configured to control the vehicle to perform road anomalies processing based on the data of the second road anomalies; **characterised in that**:
the acquisition module is configured to acquire the data of the first road anomalies at first predetermined time intervals based on the position information.

11. The vehicle control apparatus of claim 10, wherein the control module is further configured to control the vehicle to decelerate to travel through road anomalies or change to an adjacent lane based on the data of the second road anomalies when the vehicle is in an assistant driving mode.

12. The vehicle control apparatus of claim 10 or claim 11, wherein the control module is further configured to, when there are a plurality of pieces of data of second road anomalies, sort the plurality of pieces of data of second road anomalies based on distances from the current position, and control the vehicle to perform road anomalies processing based on the data of the second road anomalies closest to the current position according to a result of said sorting.

13. A vehicle comprising:
a processor, and
memory having a computer program stored therein which, when executed by the processor, performs the vehicle control method according to any one of claims 1 to 9.

14. A non-volatile computer-readable storage medium having a computer program stored therein which, when executed by one or more processors, performs the vehicle control method according to any one of claims 1 to 9.

## Patentansprüche

1. Fahrzeugsteuerverfahren, das Folgendes beinhaltet:
Schritt 1, Erfassen (S10) von Positionsinformationen eines Fahrzeugs in Echtzeit, um eine aktuelle Position des Fahrzeugs zu bestimmen;
Schritt 2, Erfassen (S20) von Daten über erste Straßenanomalien innerhalb eines ersten vorbestimmten Bereichs der aktuellen Position aus einer Datenbank des Fahrzeugs mit lokalen Straßenanomalien;
Schritt 3, Screenen (S30) der Daten über erste Straßenanomalien, um Daten über zweite Straßenanomalien innerhalb eines zweiten vorbestimmten Bereichs der aktuellen Position zu erhalten, wobei der erste vorbestimmte Bereich größer ist als der zweite vorbestimmte Bereich; und
Schritt 4, Steuern (S40) des Fahrzeugs, um die Verarbeitung von Straßenanomalien auf der Basis der erhaltenen Daten über zweite Straßenanomalien durchzuführen; **dadurch gekennzeichnet, dass**:
der genannte Schritt 2 das Erfassen (S201) der Daten über die ersten Straßenanomalien in ersten vorbestimmten Zeitintervallen auf der Basis der Positionsinformationen beinhaltet.

2. Fahrzeugsteuerverfahren nach Anspruch 1, wobei der genannte Schritt 3 Folgendes beinhaltet:
Screenen (S301) der Daten über die ersten Straßenanomalien in zweiten vorbestimmten Zeitintervallen, um die Daten über die zweiten Straßenanomalien zu erhalten, wobei das zweite vorbestimmte Zeitintervall kürzer ist als das erste vorbestimmte Zeitintervall.

3. Fahrzeugsteuerverfahren nach einem vorherigen Anspruch, wobei der genannte Schritt 4 Folgendes beinhaltet:
Steuern (S401) des Fahrzeugs zum Abbremsen, um durch Straßenanomalien zu fahren, auf der Basis der Daten über die zweiten Straßenanomalien, wenn das Fahrzeug in einem Assistenzfahrmodus ist.

4. Fahrzeugsteuerverfahren nach einem vorherigen Anspruch, wobei der genannte Schritt 4 Folgendes beinhaltet:
Steuern (S401) des Fahrzeugs zum Wechseln auf eine benachbarte Spur auf der Basis der Daten über die zweiten Straßenanomalien, wenn das Fahrzeug in einem Assistenzfahrmodus ist.

5. Fahrzeugsteuerverfahren nach einem vorherigen Anspruch, wobei der genannte Schritt 4 Folgendes beinhaltet:
Erzeugen einer akustischen oder visuellen Warnung vor den zweiten Straßenanomalien.

6. Fahrzeugsteuerverfahren nach einem vorherigen Anspruch, wobei der genannte Schritt 4 Folgendes beinhaltet:
Sortieren (S402), wenn mehrere Datenelemente über zweite Straßenanomalien vorhanden sind, der mehreren Datenelemente über zweite Straßenanomalien auf der Basis von Entfernungen von der aktuellen Position; und
Steuern (S403) des Fahrzeugs, um die Verarbeitung von Straßenanomalien auf der Basis der Daten über die der aktuellen Position am nächsten liegenden zweiten Straßenanomalien gemäß einem Ergebnis der genannten Sortierung durchzuführen.

7. Fahrzeugsteuerverfahren nach einem vorherigen Anspruch, das ferner Folgendes beinhaltet:
Erkennen (S202), ob Straßenanomaliendaten auf einem Server für das Fahrzeug aktualisiert wurden; und
Aktualisieren (S203) der Datenbank des Fahrzeugs mit lokalen Straßenanomalien, wenn die Straßenanomaliedaten auf dem Server aktualisiert wurden.

8. Fahrzeugsteuerverfahren nach Anspruch 7, wobei:
das genannte Erkennen jedes Mal durchgeführt wird, wenn ein Navigationssystem des Fahrzeugs gestartet wird.

9. Fahrzeugsteuerverfahren nach einem vorherigen Anspruch, wobei die Datenbank mit lokalen Straßenanomalien Folgendes umfasst:
Erfassungsortsinformationen, Informationen über den geographischen Standort, Informationen über die Erfassungszeit und/oder Bildinformationen über Anomalien.

10. Fahrzeugsteuervorrichtung (100), die Folgendes umfasst:
ein Positionierungsmodul (110), das zum Erfassen von Positionsinformationen eines Fahrzeugs in Echtzeit konfiguriert ist, um eine aktuelle Position des Fahrzeugs zu bestimmen;
ein Erfassungsmodul (120), das zum Erfassen von Daten über erste Straßenanomalien innerhalb eines ersten vorbestimmten Bereichs der aktuellen Position von einer Datenbank des Fahrzeugs mit lokalen Straßenanomalien konfiguriert ist; wobei
das Erfassungsmodul auch zum Screenen der Daten über die ersten Straßenanomalien konfiguriert ist, um Daten über zweite Straßenanomalien innerhalb eines zweiten vorbestimmten Bereichs der aktuellen Position zu erhalten, wobei der erste vorbestimmte Bereich größer ist als der zweite vorbestimmte Bereich; und
ein Steuermodul (130), das zum Steuern des Fahrzeugs konfiguriert ist, so dass es die Verarbeitung von Straßenanomalien auf der Basis der Daten über die zweiten Straßenanomalien durchführt; **dadurch gekennzeichnet, dass**:
das Erfassungsmodul zum Erfassen der Daten über die ersten Straßenanomalien in ersten vorbestimmten Zeitintervallen auf der Basis der Positionsinformationen konfiguriert ist.

11. Fahrzeugsteuervorrichtung nach Anspruch 10, wobei das Steuermodul ferner zum Steuern des Fahrzeugs konfiguriert ist, so dass es abbremst, um durch Straßenanomalien zu fahren oder auf eine benachbarte Spur zu wechseln, auf der Basis der Daten über die zweiten Straßenanomalien, wenn das Fahrzeug in einem Assistenzfahrmodus ist.

12. Fahrzeugsteuervorrichtung nach Anspruch 10 oder Anspruch 11, wobei das Steuermodul ferner, wenn mehrere Datenelemente über zweite Straßenanomalien vorhanden sind, konfiguriert ist zum Sortieren mehrerer Datenelemente über zweite Straßenanomalien auf der Basis von Entfernungen von der aktuellen Position, und zum Steuern des Fahrzeugs zum Durchführen der Verarbeitung von Straßenanomalien auf der Basis der Daten über die der aktuellen Position am nächsten liegenden zweiten Straßenanomalien gemäß einem Ergebnis der genannten Sortierung.

13. Fahrzeug, das Folgendes umfasst:
einen Prozessor, und
einen Speicher mit einem darin gespeicherten Computerprogramm, das bei Ausführung durch den Prozessor das Fahrzeugsteuerverfahren nach einem der Ansprüche 1 bis 9 durchführt.

14. Nichtflüchtiges, computerlesbares Speichermedium mit einem darin gespeicherten Computerprogramm, das bei Ausführung durch einen oder mehrere Prozessoren das Fahrzeugsteuerverfahren nach einem der Ansprüche 1 bis 9 durchführt.

## Revendications

1. Procédé de commande de véhicule, comprenant :
étape 1, une acquisition (S10) d'informations de position d'un véhicule en temps réel pour déterminer une position actuelle du véhicule ;
étape 2, une acquisition (S20) de données de premières anomalies routières au sein d'une première plage prédéterminée de la position actuelle à partir d'une base de données d'anomalies routières locales du véhicule ;
étape 3, une analyse (S30) des données des premières anomalies routières pour obtenir des données de secondes anomalies routières au sein d'une seconde plage prédéterminée de la position actuelle, dans lequel la première plage prédéterminée est plus importante que la seconde plage prédéterminée ; et
étape 4, une commande (S40) du véhicule pour réaliser un traitement d'anomalies routières sur la base des données obtenues des secondes anomalies routières ; **caractérisé en ce que** :
ladite étape 2 comprend une acquisition (S201) des données des premières anomalies routières à de premiers intervalles de temps prédéterminés sur la base des informations de position.

2. Procédé de commande de véhicule selon la revendication 1, dans lequel ladite étape 3 comprend :
une analyse (S301) des données des premières anomalies routières à de seconds intervalles de temps prédéterminés pour obtenir les données des secondes anomalies routières, dans lequel le second intervalle de temps prédéterminé est plus court que le premier intervalle de temps prédéterminé.

3. Procédé de commande de véhicule selon une quelconque revendication précédente, dans lequel ladite étape 4 comprend :
une commande (S401) du véhicule pour décélérer pour traverser des anomalies routières sur la base des données des secondes anomalies routières lorsque le véhicule se trouve dans un mode de conduite assistée.

4. Procédé de commande de véhicule selon une quelconque revendication précédente, dans lequel ladite étape 4 comprend :
une commande (S401) du véhicule pour se déplacer sur une voie adjacente sur la base des données des secondes anomalies routières lorsque le véhicule se trouve dans un mode de conduite assistée.

5. Procédé de commande de véhicule selon une quelconque revendication précédente, dans lequel ladite étape 4 comprend :
une génération d'un avertissement sonore ou visuel des secondes anomalies routières.

6. Procédé de commande de véhicule selon une quelconque revendication précédente, dans lequel ladite étape 4 comprend :
lorsqu'il existe une pluralité d'éléments de données de secondes anomalies routières, un tri (S402) de la pluralité d'éléments de données de secondes anomalies routières en fonction de distances par rapport à la position actuelle ;
et
une commande (S403) du véhicule pour réaliser un traitement d'anomalies routières sur la base des données des secondes anomalies routières les plus proches de la position actuelle selon un résultat dudit tri.

7. Procédé de commande de véhicule selon une quelconque revendication précédente, comprenant en outre :
une détection (S202) du fait que des données d'anomalies routières sur un serveur pour le véhicule ont été mises à jour ou non ;
et
une mise à jour (S203) de la base de données d'anomalies routières locales du véhicule lorsque les données d'anomalies routières sur le serveur ont été mises à jour.

8. Procédé de commande de véhicule selon la revendication 7, dans lequel :
ladite détection est réalisée à chaque démarrage d'un système de navigation du véhicule.

9. Procédé de commande de véhicule selon une quelconque revendication précédente, dans lequel la base de données d'anomalies routières locales comprend :
des informations d'emplacement d'acquisition, des informations de localisation géographique, des informations relatives au moment d'acquisition et/ou des informations d'image d'anomalies.

10. Appareil de commande de véhicule (100), comprenant :
un module de positionnement (110), configuré pour acquérir des informations de position d'un véhicule en temps réel pour déterminer une position actuelle du véhicule ;
un module d'acquisition (120), configuré pour acquérir des données de premières anomalies routières au sein d'une première plage prédéterminée de la position actuelle à partir d'une base de données d'anomalies routières locales du véhicule ;
dans lequel
le module d'acquisition est également configuré pour analyser les données des premières anomalies routières pour obtenir des données de secondes anomalies routières au sein d'une seconde plage prédéterminée de la position actuelle, dans lequel la première plage prédéterminée est plus importante que la seconde plage prédéterminée ;
et
un module de commande (130), configuré pour commander le véhicule pour réaliser un traitement d'anomalies routières sur la base des données des secondes anomalies routières ; **caractérisé en ce que** :
le module d'acquisition est configuré pour acquérir les données des premières anomalies routières à de premiers intervalles de temps prédéterminés sur la base des informations de position.

11. Appareil de commande de véhicule selon la revendication 10, dans lequel le module de commande est en outre configuré pour commander le véhicule pour décélérer pour traverser des anomalies routières ou se déplacer sur une voie adjacente sur la base des données des secondes anomalies routières lorsque le véhicule se trouve dans un mode de conduite assistée.

12. Appareil de commande de véhicule selon la revendication 10 ou la revendication 11, dans lequel le module de commande est en outre configuré pour, lorsqu'il existe une pluralité d'éléments de données de secondes anomalies routières, trier la pluralité d'éléments de données de secondes anomalies routières en fonction de distances par rapport à la position actuelle, et commander le véhicule pour réaliser un traitement d'anomalies routières sur la base des données des secondes anomalies routières les plus proches de la position actuelle selon un résultat dudit tri.

13. Véhicule comprenant :
un processeur, et
une mémoire présentant un programme informatique stocké dessus qui, lorsqu'il est exécuté par le processeur, réalise le procédé de commande de véhicule selon l'une quelconque des revendications 1 à 9.

14. Support de stockage lisible par ordinateur non volatile présentant un programme informatique stocké dessus qui, lorsqu'il est exécuté par un ou plusieurs processeurs, réalise le procédé de commande de véhicule selon l'une quelconque des revendications 1 à 9.
